# EUROPÄISCHE PATENTSCHRIFT

(11) **EP 0 721 693 B1**
(45) Veröffentlichungstag und Bekanntmachung des Hinweises auf die Patenterteilung: **19.12.2001**
(21) Anmeldenummer: 94927662.0
(22) Anmeldetag: 07.09.1994
(51) Int. Cl.: H02P 3/06

(54) **BREMSSCHALTUNG FÜR EINEN UNIVERSALMOTOR**
BRAKING CIRCUIT FOR A UNIVERSAL MOTOR
CIRCUIT DE FREINAGE POUR MOTEUR UNIVERSEL

(30) Priorität: 29.09.1993 DE 4333064
(43) Veröffentlichungstag der Anmeldung: 17.07.1996
(73) Patentinhaber: SCINTILLA AG, CH-4501 Solothurn (CH)
(72) Erfinder: BARBISCH, Benedikt, CH-4514 Lommiswil (CH)
(74) Vertreter: Voss, Klaus, Dipl.-Ing.
(86) Internationale Anmeldenummer: EP9403261
(87) Internationale Veröffentlichungsnummer: WO9509478

(56) Entgegenhaltungen:
- EP-A- 0 032 980
- EP-A- 0 326 146
- CH-A- 438 469
- CH-A- 501 334

## Beschreibung

### Stand der Technik

Die Erfindung geht aus von einer Bremsschaltung für einen Universalmotor, bei dem zum Bremsen eine oder beide Feldwicklungen umgepolt in den Ankerstromkreis geschaltet werden. Eine derartige Umpolung ist beispielsweise aus der DE 38 02 419 A1 bekannt. Die Umpolung erfolgt dabei mittels antiparallelgeschalteter Dioden für beide Feldwicklungen. Des weiteren ist ein Schalter vorgesehen, mit dem die beiden dem Anker zugewandten Feldwicklungsanschlüsse zum Bremsen kurzgeschlossen werden. Dieser Kurzschluß erfolgt sofort durch Betätigen des Schalters, so daß wegen der Remanenz in den Feldspulen ein starker Bremsstrom einsetzt, der ein unerwünschtes Bürstenfeuer nach sich zieht. Dieses Bürstenfeuer bewirkt einen vorzeitigen Verschleiß am Kollektor des Motors.

Auch ist bei der bekannten Schaltung der Bremsstrom nicht steuerbar, so daß sich zunächst bei hoher Drehzahl mit großer Selbstinduktion ein starker Bremsstrom einstellt, der mit abnehmender Drehzahl schwächer wird. Die Bremswirkung ist dadurch über die Bremszeit sehr ungleichmäßig. Aus der EP 0 032 980 A1 ist eine elektromotorische Türverriegelungseinrichtung insbesondere für Kraftfahrzeuge bekannt geworden, wobei beim Abschalten des Motors der Motor selbst über einen Halbleiterschalter kurzgeschlossen wird, so daß ein Nachlaufen des Motors vermieden wird. Aus der CH-PS 501,334 ist eine Einrichtung zur elektrischen Bremsung eines Kollektormotors bekannt geworden, bei dem durch eine Steuerung des Tastverhältnisses durch die Wicklung zunächst ein Strom fließt, dessen Wert kleiner ist als der Strom durch den Bremswiderstand, da wegen den kurzen Steuerimpulsen die Kommutierung des Motorstromes in den Erregerkreisen nicht vollständig durchgeführt wird. Das Verhältnis wird nunmehr so groß gewählt, daß die Rückwirkungen auf den Bremswiderstand sehr klein sind, d.h. der Bremswiderstand ist fast mit seinem vollem Wert wirksam. Aus der CH-PS 438 469 ist ein Verfahren zur Bremsung eines Gleichstromkollektormotors und eine Schaltung zur Durchführung des Verfahrens bekannt geworden, wobei der Kollektormotor im Bremsbetrieb mittels eines Thyristors kurzgeschlossen wird.

### Vorteile der Erfindung

Die erfindungsgemäße Bremsschaltung hat demgegenüber den Vorteil, daß das Bürstenfeuer stark reduziert wird, da das Einschalten des Halbleiterschalters zum Bremsen des laufenden Ankers zeitverzögert erfolgt. Wird beispielsweise der Netzstrom länger als 10 Millisekunden unterbrochen, dann schaltet der Halbleiterschalter durch, so daß sich wegen der Selbsterregung der Bremsstrom aufbaut. Durch das zeitverzögerte Schalten des Halbleiterschalters wird weiter bewirkt, daß sich die magnetische Feldenergie in den Feldspulen soweit abgebaut hat, daß beim Einsetzen des Bremsstromes die Entstehung des Bürstenfeuers unterdrückt wird. Durch den geringeren Verschleißt wird die Lebensdauer und Zuverlässigkeit des Motors erheblich verbessert.

Durch die in den abhängigen Ansprüchen aufgeführten Maßnahmen sind vorteilhafte Weiterbildungen und Verbesserungen der im Hauptanspruch angegebenen Bremsschaltung möglich. Besonders vorteilhaft ist, daß der Halbleiterschalter durch eine Steuerschaltung intermittierend schaltbar ist, da dadurch der Bremsstrom beliebig geregelt werden kann. Ist der Halbleiterschalter beispielsweise leitend, dann findet die Selbsterregung statt. Dabei wird kinetische Energie des Rotors in magnetische Energie während des Bremsens umgewandelt. Erreicht der Strom einen bestimmten oberen Grenzwert, so kann der Schalter wieder geöffnet werden, so daß der Strom nur noch in den Feldwicklungen fließt. Dort wird die magnetische Energie so lange in diesem Stromkreis in Wärme umgewandelt, bis der Strom wiederum einen unteren Grenzwert erreicht hat, bei dem der Halbleiterschalter von neuem geschlossen wird. Durch den intermittierenden Betrieb ergibt sich als besonderer Vorteil eine Begrenzung des Bremsstromes und damit nicht nur ein geringerer Verschleiß der Kohlebürsten, sondern auch ein sanftes Bremsen, was beispielsweise bei Kreissägen oder Winkelschleifern gewünscht ist. Besondes vorteilhaft ist, daß die kinetische und magnetische Energie hauptsächlich im Motor und nicht in dem Halbleiterbauteil in Wärme umgewandelt wird. Dadurch kann auch ein kleinerer Kühlkörper verwendet werden.

Vorteilhaft ist weiter, daß die Steuerschaltung für die Ansteuerung des Halbleiterschalters einen weiteren Transistor aufweist. Mit diesem Transistor kann der Halbleiterschalter verlustarm angesteuert werden.

Eine bevorzugte Anwendung der erfindungsgemäßen Bremsschaltung ergibt sich für ein Elektrohandwerkzeug, bei dem laufende Messer oder Sägen naturgemäß ein großes Gefahrenpotential für die Bedienperson darstellen.

### Zeichnung

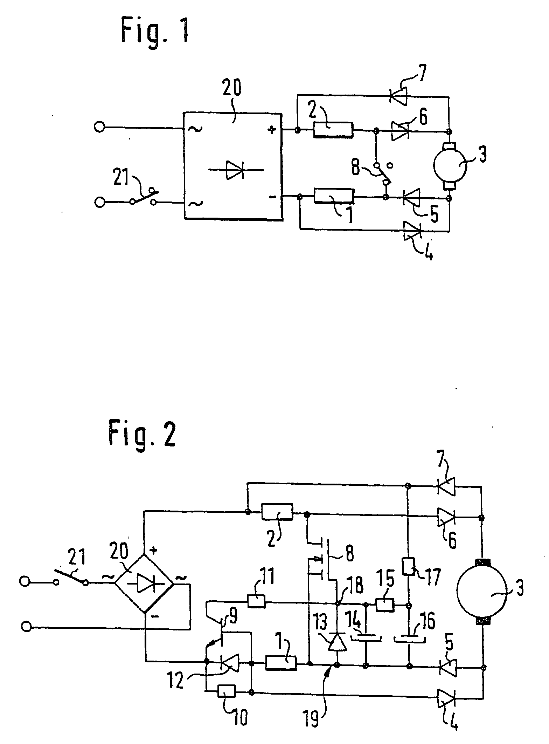

Ein Ausführungsbeispiel der Erfindung ist in der Zeichnung dargestellt und in der nachfolgenden Beschreibung näher erläutert. Es zeigen Figur 1 eine bekannte Bremsschaltung und Figur 2 ein Ausführungsbeispiel der Erfindung.

### Beschreibung des Ausführungsbeispiels

Das erfindungsgemäße Ausführungsbeispiel zeigt gemäß Figur 2 einen als Universalmotor ausgebildeten Reihenschlußmotor mit einer ersten Feldwicklung 1, einer zweiten Feldwicklung 2 und einem Anker 3. Über die Feldwicklungen 1, 2 sind jeweils zwei antiparallelgeschaltete Dioden 4, 5 bzw. 6, 7 in Reihe zum Anker 3 geschaltet. Die Dioden 4, 5, 6, 7 dienen zum Umpolen der Feldwicklungen 1, 2 im Bremsbetrieb. An der dem Anker 3 zugewandten Seite der Feldwicklungen 1, 2 ist der Leistungspfad eines Halbleiterschalters, beispielsweise eines Feldeffekt-Transistors oder eines Thyristors 8 geschaltet. Ein Steuereingang 18 des Halbleiterschalters 8 ist über einen Vorwiderstand 11 mit dem Kollektor eines Transistors 9 verbunden, dessen Emitter auf Masse geschaltet ist. An den Steuereingang 18 ist weiter anodenseitig eine Diode 13, ein erster Kondensator 14 und ein zweiter Widerstand 15 geschaltet. Die jeweils zweiten Anschlüsse der ersten Diode 13 und des ersten Kondensators 14 sind an die interne Masseleitung 19 zur ersten Feldspule 1 geschaltet. Der zweite Anschluß des zweiten Widerstandes 15 ist einerseits über einen dritten Widerstand 17 mit der Anode der Diode 7 verbunden, die ihrerseits zusammen mit dem noch freien Anschluß der zweiten Feldwicklung 2 an Plus geschaltet ist. Andererseits sind der zweite Widerstand 15 und der dritte Widerstand 17 gemeinsam mit einem zweiten Kondensator 16 verbunden, dessen zweiter Anschluß ebenfalls mit der internen Masseleitung 19 verbunden ist. Zwischen der Basis und dem Emitter des Transistors 9 ist parallel zu Emitterdiode eine zweite Diode 12 und parallel dazu ein vierter Widerstand 10 geschaltet. Zur Versorgung des Motors ist eine Gleichrichterschaltung 20 in Brückenschaltung vorgesehen, die eingangsseitig über einen Hauptschalter 21 mit der Netzspannung verbunden ist.

Im folgenden wird anhand der Figuren 1 und 2 die Funktionsweise dieser Schaltungsanordnung näher erläutert. Die prinzipielle Funktionsweise wird zunächst bei der bekannten Schaltung gemäß der Figur 1 erläutert, wobei gleiche Funktionseinheiten mit gleichen Bezugszeichen versehen sind.

Der über den Hauptschalter 21 versorgte Gleichrichter 20 liefert eine Gleichspannung an den Elektromotor mit den Feldwicklungen 1, 2 und dem Anker 3. Im Motorbetrieb fließt über den Plusanschluß der zweiten Feldwicklung bei offenem Schaltkontakt des Schalters 8 ein Motorstrom über die Diode 6, den Anker 3 und zurück über die Diode 5 und die erste Feldwicklung 1 zum Minusanschluß. Beim Bremsbetrieb wird der Hauptschalter 21 geöffnet und gleichzeitig der Schaltkontakt des Schalters 8 geschlossen. Diese Umschaltung erfolgt beim Stand der Technik (Figur 1) gleichzeitig, da sowohl der Schalter 8 als auch 21 mechanisch miteinander gekoppelt sind. Durch das Schließen des Kontaktes des Schalters 8 werden nun die Feldspulen 1, 2 zum Anker 3 in Reihe geschaltet. Hier fließt aufgrund der Remanenz und der Drehgeschwindigkeit des Ankers ein Erregerstrom über die Diode 7, die zweite Feldwicklung 2, den Schalter 8, die erste Feldwicklung 1 und zurück über die Diode 4 zum Anker 3. Dieser Strom fließt so lange, bis der Motor abgebremst ist und das Magnetfeld in sich zusammengebrochen ist. Der Bremsstrom in dem genannten Kreis setzt mit Schließen des Schaltkontaktes des Schalters 8 schlagartig ein, da infolge der Remanenz der Feldspulen die Selbsterregung sofort aufgebaut wird.

Im Gegensatz dazu wird erfindungsgemäß vorgeschlagen, anstelle des Schalters 8 einen Halbleiterschalter einzusetzen, der über eine Steuerschaltung bestehend aus den Bauteilen 9 bis 18 ansteuerbar ist. Als Halbleiterschalter 8 ist beispielsweise ein Feldeffekt-Transistor, Thyristor, GTO (Gate turn on Thyristor) oder IGBT (Isolated Gate Bipolar Transistor) verwendbar. Des weiteren kann der Elektromotor nur eine Feldwicklung aufweisen, die umschaltbar ist.

Die Funktionsweise im Motorbetrieb ist wie zuvor zu Figur 1 beschrieben. Wird der Hauptschalter 21 geschlossen, dann wird ein Gleichstrom bzw. eine Gleichspannung von dem Gleichrichter 20 geliefert, der über die erste und zweite Feldwicklung 1, 2 und die Dioden 6, 5 einen Stromkreis mit dem Anker 3 bildet. Der Halbleiterschalter 8 ist in diesem Fall nicht angesteuert und damit hochohmig, da in diesem Betriebszustand der Transistor 9 wegen der Diode 12 leitend ist und den Steuereingang 18 herunterzieht.

Beim Bremsen wird der Schalter 21 geöffnet und somit die Gleichspannungsversorgung unterbrochen. Dadurch erhält der Transistor 9 keine Steuerspannung und wird gesperrt. Dadurch steigt der Spannungspegel am Steuereingang 18, so daß der Halbleiterschalter 8 leitend wird. Dadurch sind die beiden Feldspulen 1, 2 niederohmig miteinander verbunden. Wegen des Zeitgliedes aus den Kondensatoren 14, 16 und den Widerständen 15, 17 tritt dieser Zustand zeitverzögert, beispielweise nach 10 Millisekunden ein. Da in den Feldwicklungen noch ein Strom fließt, ist die Selbsterregung zum Bremsen sichergestellt. Eine zuverlässige Bremsfunktion ist damit beispielsweise bei Elektrohandwerkzeugen wie Heckenscheren, Sägen oder Schleifern sichergestellt.

In weiterer Ausgestaltung der Erfindung ist vorgesehen, den Halbleiterschalter 8 zur Steuerung des Bremsstromes mit einer nicht dargestellten Impulsschaltung intermittierend ein- und auszuschalten. Eine derartige Impulsschaltung kann beispielsweise mit einem bekannten Multivibrator aufgebaut werden, dessen Frequenz ein Maß für den Erregerstrom bzw. Bremsstrom ist. Dadurch kann in einfacher Weise der Bremsstrom vorteilhaft gesteuert oder auch geregelt werden, wenn ein Sollwert vorgegeben wird. Ein Sollwert kann beispielsweise mittels eines nicht dargestellten Komparators eingestellt werden.

Anstelle der Dioden 4, 5, 6, 7 sind natürlich auch mechanische Umschalter vorsehbar, die mit dem Hauptschalter 21 gekoppelt sind.

Jedesmal, wenn die Netzspannung kurzzeitig unterbrochen wird, setzt nach Ablauf der Verzögerungszeit die Bremse ein. Das kann besonders dann von Vorteil sein, wenn beispielsweise das Elektrohandwerkzeug das Netzkabel ungewollt durchschneidet. Eine Verletzungsgefahr für den Bediener ist damit weitgehend ausgeschlossen.

Auch ist eine einfache Zweihand-Sicherheitsbedienung vorsehbar, wobei zwei Handschalter in Serie zum Netzteil geschaltet sind. Sobald ein Schalter geöffnet wird, ist der Stromfluß unterbrochen und die Bremsung setzt ein.

## Patentansprüche

1. Bremsschaltung für einen Universalmotor mit wenigstens einer Feldwicklung, wobei die wenigstens eine Feldwicklung für den Bremsbetrieb mittels einer Schaltvorrichtung umpolbar und dem Anker des Universalmotors parallel schaltbar ist, **dadurch gekennzeichnet, daß** die Schaltvorrichtung (4 bis 8) einen steuerbaren Halbleiterschalter (8) aufweist und daß die Steuerschaltung (9 bis 18) ein Zeitglied (13 bis 18) aufweist, mit dem der Halbleiterschalter (8) verzögert einschaltbar ist.

2. Steuerschaltung nach Anspruch 1, **dadurch gekennzeichnet, daß** der Halbleiterschalter (8) zur Steuerung des Bremsstromes mit einer Steuerschaltung (9 bis 18) an seinem Steuergang (18) intermittierend schaltbar ist.

3. Bremsschaltung nach einem der vorhergehenden Ansprüche, **dadurch gekennzeichnet, daß** der Halbleiterschalter (8) ein Feldeffekt-Transistor, ein Thyristor, ein GTO (Gate turn on Thyristor) oder ein IGBT (Isolated Gate Bipolar Transistor) ist.

4. Bremsschaltung nach Anspruch 2 oder 3, **dadurch gekennzeichnet, daß** die Steuerschaltung (9 bis 18) wenigstens einen Transistor (9) aufweist.

5. Bremsschaltung nach einem der vorhergehenden Ansprüche, **dadurch gekennzeichnet, daß** der Halbleiterschalter (8) im Leistungspfad jeweils mit der dem Anker zugewandten Anschlußseite der ersten und zweiten Feldwicklung (1, 2) verbunden ist.

6. Bremsschaltung nach Anspruch 5, **dadurch gekennzeichnet, daß** der Transistor (8) im Leistungspfad über einen Widerstand (11) mit dem Steuereingang (18) verbunden ist und den Halbleiterschalter (8) im Motorbetrieb sperrt und im Bremsbetrieb durchschaltet.

7. Bremsschaltung nach einem der vorhergehenden Ansprüche, **dadurch gekennzeichnet, daß** die Bremsschaltung für ein Elektrohandwerkzeug verwendbar ist.

## Claims

1. Braking circuit for a universal motor having at least one field winding, it being possible for the at least one field winding to have its polarity reversed for braking operation by means of a switching device and to be connected in parallel with the armature of the universal motor, **characterized in that** the switching device (4 to 8) has a controllable semiconductor switch (8), and **in that** the control circuit (9 to 18) has a timing element (13 to 18) by means of which the semiconductor switch (8) can be closed with a delay.

2. Braking circuit according to Claim 1, **characterized in that**, for the purpose of controlling the braking current, the semiconductor switch (8) can be connected intermittently at its control input (18) to a control circuit (9 to 18).

3. Braking circuit according to one of the preceding claims, **characterized in that** the semiconductor switch (8) is a field effect transistor, a thyristor, a GTO (Gate Turn-On Thyristor) or an IGBT (Isolated Gate Bipolar Transistor).

4. Braking circuit according to Claim 2 or 3, **characterized in that** the control circuit (9 to 18) has at least one transistor (9).

5. Braking circuit according to one of the preceding claims, **characterized in that** the semiconductor switch (8) is connected in the power path respectively to the terminal side, facing the armature, of the first and second field windings (1, 2).

6. Braking circuit according to Claim 5, **characterized in that** the transistor (8) is connected to the control input (18) in the power path via a resistor (11) and blocks the semiconductor switch (8) in motor operation and switches it through in braking operation.

7. Braking circuit according to one of the preceding claims, **characterized in that** the braking circuit can preferably be used for an electric hand tool.

## Revendications

1. Circuit de freinage pour un moteur universel avec au moins un enroulement d'inducteur, dans lequel au moins l'un des enroulements d'inducteur peut avoir sa polarité inversée au moyen d'un dispositif d'interrupteur, pour le fonctionnement en freinage, et peut être monté en parallèle à l'induit du moteur universel,
**caractérisé en ce que**
le dispositif d'interrupteur (4 à 8) présente un interrupteur à semi-conducteur commandable (8), et
le circuit de commande (9 à 18) présente un dispositif de temporisation (13 à 18) avec lequel l'interrupteur à semi-conducteur (8) peut être branché de façon temporisée.

2. Circuit de commande selon la revendication 1,
**caractérisé en ce que**
l'interrupteur à semi-conducteur (8) servant à commander le courant de freinage peut être branché de façon intermittente avec un circuit de commande (9 à 18), à son entrée de commande (18).

3. Circuit de freinage selon l'une quelconque des revendications précédentes,
**caractérisé en ce que**
l'interrupteur à semi-conducteur (8) est un transistor à effet de champ, un thyristor, un GTO (Gate turn on Thyristor) ou un IGBT (Isolated Gate Bipolar Transistor).

4. Circuit de freinage selon l'une quelconque des revendications 2 ou 3,
**caractérisé en ce que**
le circuit de commande (9 à 18) présente au moins un transistor.

5. Circuit de freinage selon l'une quelconque des revendications précédentes,
**caractérisé en ce que**
l'interrupteur à semi-conducteur (8) est relié, dans son circuit de puissance, respectivement au côté de raccordement du premier et du second enroulement de l'inducteur (1, 2), qui est tourné vers l'induit.

6. Circuit de freinage selon la revendication 5,
**caractérisé en ce que**
le transistor (8) est relié dans son circuit de puissance, par l'intermédiaire d'une résistance (11), à l'entrée de commande (18) et bloque l'interrupteur à semi-conducteur (8) dans la position correspondant au fonctionnement en moteur ou le met dans la position passante pour le fonctionnement en freinage.

7. Circuit de freinage selon l'une quelconque des revendications précédentes,
**caractérisé en ce que**
le circuit de freinage peut être utilisé pour un outil électrique à main.
